(19) Europäisches Patentamt / European Patent Office / Office européen des brevets

(11) **EP 4 484 472 A1**

(12) **EUROPEAN PATENT APPLICATION**
published in accordance with Art. 153(4) EPC

(43) Date of publication:
01.01.2025 Bulletin 2025/01

(21) Application number: 23759989.9

(22) Date of filing: 21.02.2023

(51) International Patent Classification (IPC):
C08J 3/12 (2006.01)     A23L 7/10 (2016.01)
A23L 29/212 (2016.01)   A47J 43/04 (2006.01)
C08B 30/14 (2006.01)    C08B 30/16 (2006.01)

(52) Cooperative Patent Classification (CPC):
A23L 7/10; A23L 29/212; A47J 43/04; C08B 30/14;
C08B 30/16; C08J 3/12

(86) International application number:
PCT/JP2023/006269

(87) International publication number:
WO 2023/162988 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.02.2022   JP 2022028038
06.05.2022   JP 2022076663

(71) Applicants:
• **Alpha Tec Corporation**
**Yonezawa-shi, Yamagata 992-8510 (JP)**

• **Nishioka, Akihiro**
**Yonezawa-shi, Yamagata 992-8510 (JP)**

(72) Inventors:
• **FUKUI Masaru**
**Yonezawa-shi, Yamagata 992-8510 (JP)**
• **NISHIOKA Akihiro**
**Yonezawa-shi, Yamagata 992-8510 (JP)**
• **KODA Tomonori**
**Yonezawa-shi, Yamagata 992-8510 (JP)**

(74) Representative: **Ter Meer Steinmeister & Partner**
**Patentanwälte mbB**
**Nymphenburger Straße 4**
**80335 München (DE)**

(54) **METHOD FOR PRODUCING GELATINIZED STARCH DRY POWDER, GELATINIZED STARCH DRY POWDER, GELATINIZED BUCKWHEAT DRY POWDER, AND DEVICE FOR PRODUCING GELATINIZED STARCH DRY POWDER**

(57)     An object of the present invention is to provide a novel method and device for producing a pregelatinized starch dry powder. Another object of the present invention is to provide a pregelatinized starch dry powder having novel properties (for example, good processing properties). The present invention provides a method for producing a pregelatinized starch dry powder, the method including a step of supplying cereal grain to a production device equipped with a predetermined grinding mechanism and a temperature adjusting means, and grinding the cereal grain under shear conditions.

FIG.1

**Description**

Technical Field

The present invention relates to a method for producing a pregelatinized starch dry powder, a pregelatinized starch dry powder, a pregelatinized buckwheat dry powder, and a device for producing the pregelatinized starch dry powder.

Background Art

The pregelatinized starch dry powder is usually obtained by adding water to starch, and then heating and drying (for example, PTL 1). The pregelatinized starch dry powder can be eaten by simply adding water and kneading it properly without steaming, and has a wide range of applications. Note that gelatinization of starch, which occurs when starch is heated with water, is called "pregelatinization".

Regarding composition of starch, there is a known technology in which a mixture of heated rice and water is ground in a humid state with a stone mill grinding machine to decompose most of amylopectin contained in the rice and reduce its molecular weight (PTL 2).

On the other hand, production of the pregelatinized starch dry powder requires steps of adding water to raw cereal grain ($\beta$ cereal grain = crystalline) and heating to pregelatinize them ($\alpha$ cereal grain = amorphous), and then drying and milling them. Therefore, there was a problem that a production process of the pregelatinized starch dry powder was long and complicated, and the production cost was high.

Based on this, from the viewpoint of cost reduction and the like, for example, a method of producing the pregelatinized starch dry powder without adding water has also been proposed. For example, PTL 2 proposes a production method for obtaining pregelatinized cereal flour by heating cereal grain to a temperature of 80°C or higher and simultaneously applying shear.

Citation List

Patent Literature

PTL 1: JP H03-67555 A
PTL 2: JP 2017-163849 A
PTL 3: JP4767128B

Summary of Invention

Technical Problem

However, the production of the pregelatinized starch dry powder has the following problems.

- The degree of gelatinization may decrease due to fixation of a grinding part for the cereal grain and wear by strong contact between the cereal grain and the grinding part associated with the fixation.
- When foreign matter gets mixed into the cereal grain, damage may occur in the grinding part.

Furthermore, the resulting pregelatinized starch dry powder also has problems in processing properties due to difficulties, for example, in maintaining and adjusting elasticity and viscosity.

The present invention has been made in view of the above circumstances, and an object of the present invention is to provide a novel method and device for producing the pregelatinized starch dry powder.

Furthermore, another object of the present invention to provide the pregelatinized starch dry powder having novel properties (for example, good processing properties).

Solution to Problem

The present inventors have found that the above problems can be solved by grinding the cereal grain using a rigid member having a gap distance adjusted to be variable in the production of the pregelatinized starch dry powder, and have completed the present invention. Specifically, the present invention provides the following.

(1) A method for producing a pregelatinized starch dry powder, the method including a step of supplying cereal grain to a production device including a grinding mechanism and a temperature adjusting means, and grinding the cereal grain under shear conditions, in which
the grinding mechanism includes:

at least two rigid members arranged opposite to each other; and
a pressing member that presses at least one of the rigid members so that a gap distance between the rigid members is variable by a force from an opposing surface side of the rigid member,
the temperature adjusting means adjusts a temperature of the cereal grain in a process of being sheared by the grinding mechanism, and
the rigid members are arranged to be able to shear and grind the cereal grain supplied to a gap formed by opposing surfaces of the rigid members.

(2) A pregelatinized starch dry powder that satisfies all of the following requirements:

(requirement 1A) having at least three peaks indicating starch in gel filtration chromatography;
(requirement 1B) a first peak from a high molecular weight side having a lower intensity than that of a third peak from the high molecular weight side among the at least three peaks; and
(requirement 1C) crystallinity being 22.5% or less.

(3) A pregelatinized starch dry powder that satisfies all of the following requirements:

(requirement 2A) having at least three regions showing starch in gel filtration chromatography, and satisfying both of the following formulas (1) and (2) when, in the three regions, a region from 120 minutes or more to less than 145 minutes is designated as "A", a region from 145 minutes or more to less than 190 minutes is designated as "B", and a region from 190 minutes or more to less than 250 minutes is designated as "C"; and

$$A/(A + B + C) > 0.05 \qquad formula(1)$$

$$C/(A + B + C) > \ 0.2 \qquad formula(2)$$

(requirement 2B) crystallinity being 22.5% or less.

(4) The pregelatinized starch dry powder according to (2) or (3), in which in a loss elastic modulus in a gelation test, a maximum value at a peak that appears between shear strains of 0.03 and 0.25 is larger than a value at shear strain of 0.001.
(5) The pregelatinized starch dry powder according to (2) or (3), in which 14 mass% aqueous solution of the pregelatinized starch dry powder has a viscosity of 30 Pa·s or more and 500 Pa·s or less at 35°C, and a viscosity immediately after heating the aqueous solution at 95°C for 5 minutes is 300 Pa s or more.
(6) The pregelatinized starch dry powder according to (2) or (3), in which a viscosity of 14 mass% aqueous solution of the pregelatinized starch dry powder immediately after heating at 95°C for 5 minutes is 1000 Pa s or more.
(7) The pregelatinized starch dry powder according to (2) or (3), having a moisture content of 12.5 mass% or less.
(8) A pregelatinized buckwheat dry powder having a crystallinity of 18.0% or less.
(9) A pregelatinized buckwheat dry powder having a moisture content of 12.5 mass% or less.
(10) The pregelatinized buckwheat dry powder according to (8) or (9), in which in a loss elastic modulus in a gelation test, a maximum value at a peak that appears between shear strains of 0.03 and 0.25 is 1.30 times or more larger than a value at shear strain of 0.001.
(11) A device for producing a pregelatinized starch dry powder, the device including a grinding mechanism and a temperature adjusting means, in which
the grinding mechanism includes:

at least two rigid members arranged opposite to each other; and
a pressing member that presses at least one of the rigid members so that a gap distance between the rigid members is variable by a force from an opposing surface side of the rigid member,
the temperature adjusting means adjusts a temperature of the cereal grain in a process of being sheared by the grinding mechanism, and

the rigid members are arranged to be able to shear and grind the cereal grain supplied to a gap formed by opposing surfaces of the rigid members.

Advantageous Effects of Invention

The present invention provides a novel method and device for producing a pregelatinized starch dry powder. The present invention further provides a pregelatinized starch dry powder having novel properties (for example, good processing properties).

Brief Description of Drawings

Fig. 1 is a schematic diagram of a mill-type grinding machine used in Examples.
Fig. 2 is a diagram showing results of gel filtration chromatography analysis in Examples.
Fig. 3 is a diagram showing results of gel filtration chromatography analysis in Examples.
Fig. 4 is a diagram showing crystallinity of a pregelatinized starch dry powder produced in Examples.
Fig. 5 is a diagram showing a relationship between loss elastic modulus and shear strain of the pregelatinized starch dry powder produced in Examples.
Fig. 6 is a diagram showing analysis results of viscosity profile over time in Examples.
Fig. 7 is a diagram showing the relationship between the loss elastic modulus and the shear strain of the pregelatinized starch dry powder produced in Examples.
Fig. 8 is a diagram showing analysis results of the viscosity profile over time in Examples.

Description of Embodiments

Embodiments of the present invention will be described in detail below, but the present invention is not particularly limited thereto.

<Method for producing pregelatinized starch dry powder>

A method for producing a pregelatinized starch dry powder of the present invention (hereinafter also referred to as "production method of the present invention") satisfies all of the following requirements.

- Includes a step of supplying cereal grain to a production device including a grinding mechanism and a temperature adjusting means and grinding the cereal grain under shear conditions.
- The grinding mechanism includes at least two rigid members arranged opposite to each other, and a pressing member that presses at least one of the rigid members so that a gap distance between the rigid members is variable by a force from an opposing surface side of the rigid member.

- The temperature adjusting means adjusts a temperature of the cereal grain in a process of being sheared by the grinding mechanism.
- The rigid members are arranged to be able to shear and grind the cereal grain supplied to a gap formed by opposing surfaces of the rigid members.

As a conventional method for producing the pregelatinized starch dry powder, there is a known method in which two mills are fixed to a shaft and the cereal grain placed between them is ground by rotation of the mills (for example, JP4767128B).

In such a conventional method, particle size, degree of pregelatinization, crystallinity, and the like of cereal flour were adjusted by fixing a distance between the mills while adjusting it.

However, since a grinding machine using a fixed type mill grinds the cereal grain by pressing and fixing opposing mills, there is a possibility that degree of gelatinization may be reduced due to the accompanying wear.

In this case, even when the mills are fixed with a gap therebetween, when foreign matter the same size or larger than the gap is mixed into the cereal grain, the device may stop or the mills may be damaged, making it difficult to solve the problem.

Furthermore, it is difficult to finely adjust the distance between the mills while taking into account properties of target cereal grain, and it is difficult to obtain cereal flour having desired properties.

Therefore, as a result of intensive studies by the present inventors, it was found that when performing grinding under shear conditions with a gap distance between the mills being variable, pressure applied to the cereal grain is variable, which can protect the mills (grinding part) and improve an efficiency of grinding. For example, by making the mill movable, the cereal grain can be ground while being pressed under pressure, and when foreign matter (for example, something that is too large or too hard) gets mixed into the cereal grain, the gap can widen to eject foreign matter and protect the device.

Therefore, according to the production method of the present invention, foreign matter can be easily dealt with. Furthermore, since the production method of the present invention can be introduced into a large machine having a pressurizing mechanism, it is also possible to deal with foreign matter during mass production.

Furthermore, the present inventors have unexpectedly found that by performing grinding under shear conditions with the gap distance between the mills being variable, it is possible to produce a pregelatinized starch dry powder having novel properties by adjusting the pressure. Specifically, this pregelatinized starch dry powder has excellent elasticity and viscosity maintenance and adjustment, and has good processing properties.

The reason is not certain, but it is inferred as follows.

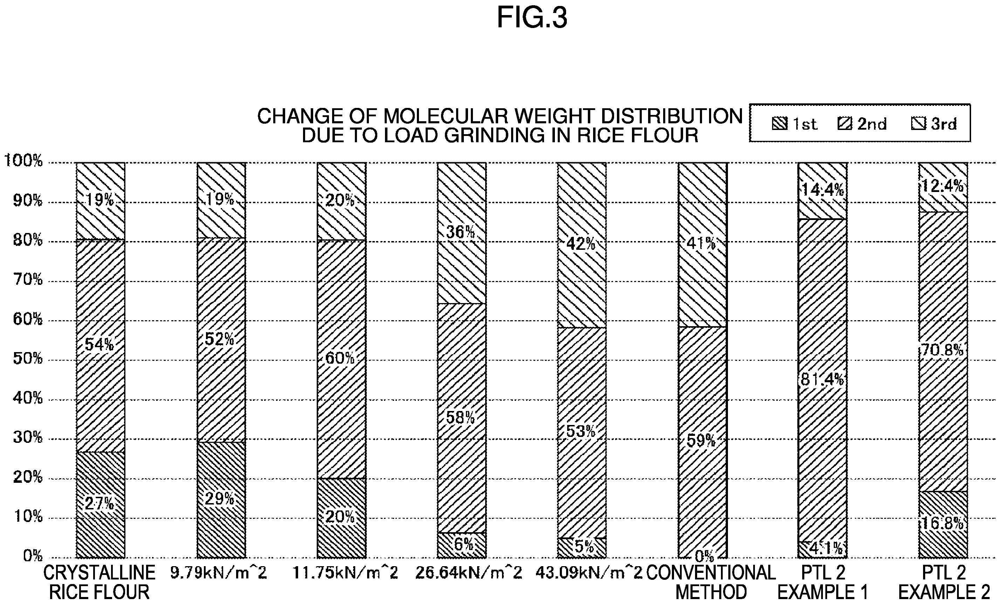

When shear pressure is applied to cereal flour with the gap distance between the mills being variable, molecular weight distribution of the pregelatinized starch dry powder is wider than that in a conventional method using a fixed type mill (Fig. 3).

Specifically, since the shear pressure is not variable in the conventional method, the molecular weight of the resulting pregelatinized starch dry powder tends to concentrate at a small molecular weight.

On the other hand, in the pregelatinized starch dry powder obtained by grinding under shear conditions with the gap distance between the mills being variable, it is distributed in both large and small molecular weights. According to the pregelatinized starch dry powder obtained as a result, it is easy to produce, for example, a gel having good "koshi (chewiness)" to be described below.

As a result of studies by the present inventors, it was found that a pregelatinized starch dry powder having a wide molecular weight distribution can achieve, for example, good processing properties and a moderate koshi to be described below.

The production method of the present invention will be described in detail below.

(1) Grinding mechanism

The grinding mechanism has at least the rigid member and the pressing member.

In the present invention, the "rigid member" is a member in which at least two members are arranged to face each other and shear and grind the cereal grain supplied therebetween.

The gap distance between the arranged rigid members may be preferably 0 to 30 mm, more preferably 0 to 1 mm with the cereal grain being not supplied, from the viewpoint of making it easier to achieve sufficient shear, and the like. However, the gap distance is variable as described below.

The rigid member can be of any shape, material, and the like which are employed as a mill or roller in conventionally known devices.

In the present invention, the "pressing member" is a member that is disposed on an opposite side of the opposing surfaces of the two rigid members, and changes the gap distance between the rigid members.

However, the gap distance varies depending on a force generated from the opposing surface side of the rigid member (for example, a force generated due to grinding of the cereal grain, and the like).

The pressing member can be any biasing means (for example, a spring).

In the present invention, the pressure applied from the rigid member to the cereal grain is adjusted by the pressing member, and grinding under shear conditions is achieved.

A lower limit of a load applied to the cereal grain by the biasing means is preferably 15 kN/m$^2$ or more, more preferably 20 kN/m$^2$ or more, and still more preferably 30 kN/m$^2$ or more, from the viewpoint that it is easy to obtain the pregelatinized starch dry powder that satisfies one or more of (requirement 1A) and (requirement 1C) described below by sufficiently shearing the cereal grain.

An upper limit of the load applied to the cereal grain by the biasing means is preferably 40 MN/m$^2$ or less, more preferably 30 MkN/m$^2$ or less, and still more preferably 25 MN/m$^2$ or less, from the viewpoint that it is easy to obtain the pregelatinized starch dry powder that satisfies one or more of (requirement 1B), (requirement 1C), (requirement 2A), and (requirement 2B) described below by making the gap distance between the rigid members sufficiently variable.

The number of pressing members is not particularly limited, and the pressing member may be disposed to press both of the two rigid members, or may be disposed to press one of them.

Conditions for grinding the cereal grain by the grinding mechanism are not particularly limited, but from the viewpoint of making it easier to achieve sufficient shear, and the like, the rigid member may be rotated such that a shear rate is preferably 90 to 600 sec$^{-1}$, and more preferably 280 to 600 sec$^{-1}$.

(2) Temperature adjusting means

The temperature adjusting means adjusts the temperature of the cereal grain during the process of being sheared by the grinding mechanism.

The temperature adjusting means can be a conventionally known heater.

For example, from the viewpoint of facilitating sufficient pregelatinization, cereal grain shearing can be carried out, for example, preferably at 80°C or higher, and more preferably at 100 to 200°C.

(3) Cereal grain

The cereal grain used in the production method of the present invention is not particularly limited as long as it is cereal grain containing starch as a main component, and any cereal grain conventionally used as a raw material for the pregelatinized starch dry powder can be employed.

Examples of the cereal grain include rice, buckwheat, wheat, adzuki bean, and corn.

(4) Other configurations

As other configurations of the production device, conventionally known configurations (cereal grain supply port, cereal grain extraction port, and the like) can be employed depending on a purpose and the like.

In the production method of the present invention, water may be added to the cereal grain, or may not be added to the cereal grain.

From the viewpoint of easily obtaining the pregelatinized starch dry powder, the production method of the present invention preferably does not include a step of adding water to the cereal grain.

(5) Pregelatinized starch dry powder obtained from the production method of the present invention

According to the production method of the present invention, as described above, the pregelatinized starch dry powder having excellent elasticity and viscosity maintenance and adjustment, and having good processing properties can be obtained.

The pregelatinized starch dry powder obtained by the production method of the present invention can be, for example, the following pregelatinized starch dry powder or pregelatinized buckwheat dry powder.

<Pregelatinized starch dry powder>

The pregelatinized starch dry powder of the present invention includes the following two aspects.

(Pregelatinized starch dry powder according to first aspect)

The pregelatinized starch dry powder that satisfies all of the following requirements.

(Requirement 1A) There are at least three peaks indicating starch in gel filtration chromatography.
(Requirement 1B) A first peak from a high molecular weight side has a lower intensity than that of a third peak from the high molecular weight side among the at least three peaks.
(Requirement 1C) Crystallinity is 22.5% or less.

(Pregelatinized starch dry powder according to second aspect)

The pregelatinized starch dry powder that satisfies all of the following requirements.
(Requirement 2A) There are at least three regions showing starch in gel filtration chromatography.

Both of the following formulas (1) and (2) are satisfied when, in the three regions, a region from 120 minutes or more to less than 145 minutes is designated as "A", a region from 145 minutes or more to less than 190 minutes is designated as "B", and a region from 190 minutes or more to less than 250 minutes is designated as "C".

$$A/(A + B + C) > 0.05 \qquad \text{formula(1)}$$

$$C/(A + B + C) > \ 0.2 \qquad \text{formula(2)}$$

(Requirement 2B) Crystallinity is 22.5% or less.

The pregelatinized starch dry powder has a combination of properties (that is, the above requirements) different from existing pregelatinized starch dry powders. The present inventors created such a novel pregelatinized starch dry powder by the production method of the present invention.

In the present invention, the "pregelatinized starch dry powder" includes cereal grain (rice, buckwheat, wheat, adzuki bean, corn, and the like) containing starch as a main component that have been pregelatinized (gelatinized, amorphized).

Hereinafter, the pregelatinized starch dry powder according to each aspect will be described.

(1) Pregelatinized starch dry powder according to first aspect

The pregelatinized starch dry powder according to a first aspect (hereinafter also referred to as a "first pregelatinized starch dry powder") satisfies all of the (requirement 1A) to the (requirement 1C). However, in addition to these requirements, the first pregelatinized starch dry powder may or may not further satisfy the (requirement 2A) described below.

(1-1) Requirement 1A

The first pregelatinized starch dry powder has at least three peaks indicating starch in the gel filtration chromatography.

In the present invention, the "gel filtration chromatography" is obtained by a method described in Examples.

In the present invention, a "peak indicating starch" can be identified by the following method.

Each peak is basically a part of a graph that starts from a lowest value and reaches a subsequent lowest value through a highest value. However, for example, the graph may appear as a shoulder. In that case, for example, a point where a downward curve becomes gentle or a point where an upward curve becomes gentle is defined as a boundary of the peak.

The first pregelatinized starch dry powder has at least three, preferably at least four peaks indicating starch. An upper limit of the number of peaks indicating starch is not particularly limited, but is usually four or less.

Further, in the present invention, the first, second, third, ... nth peaks are separated by retention time intervals (for example, from 120 minutes or more to less than 145 minutes, from 145 minutes or more to less than 190 minutes, and from 190 minutes or more to less than 250 minutes).

The gel filtration chromatography of the first pregelatinized starch dry powder can have the following three peaks, although not particularly limited.

Retention time from 120 minutes or more to less than 145 minutes: first peak from the high molecular weight side
Retention time from 145 minutes or more to less than 190 minutes: second peak from the high molecular weight side
Retention time from 190 minutes or more to less than 250 minutes: third peak from the high molecular weight side

Note that in the present invention, the "nth peak from the high molecular weight side" means the nth peak counted from a peak at a shortest retention time (elution time) in chromatography.

For example, "the first peak from the high molecular weight side" means a peak observed at the shortest retention time.

In the first pregelatinized starch dry powder, a ratio of each peak area to a total area of the three peaks can satisfy the following range.

First peak from the high molecular weight side: 5 to 30%
Second peak from the high molecular weight side: 50 to 60%
Third peak from the high molecular weight side: 10 to 45%

(1-2) Requirement 1B

In the at least three peaks indicating starch in the requirement 1A, the first peak from the high molecular weight side has a lower intensity than that of the third peak from the high molecular weight side.

In the present invention, "the first peak from the high molecular weight side has a lower intensity than that of the third peak from the high molecular weight side" means that a value (a peak height) of the first peak from the high molecular weight side is lower than that of the third peak from the high molecular weight side.

According to the production method of the present invention, peaks having such a relationship can be easily obtained. This is presumed to be a result of high-molecular starch having changed to a low-molecular form at an appropriate proportion due to a shearing force.

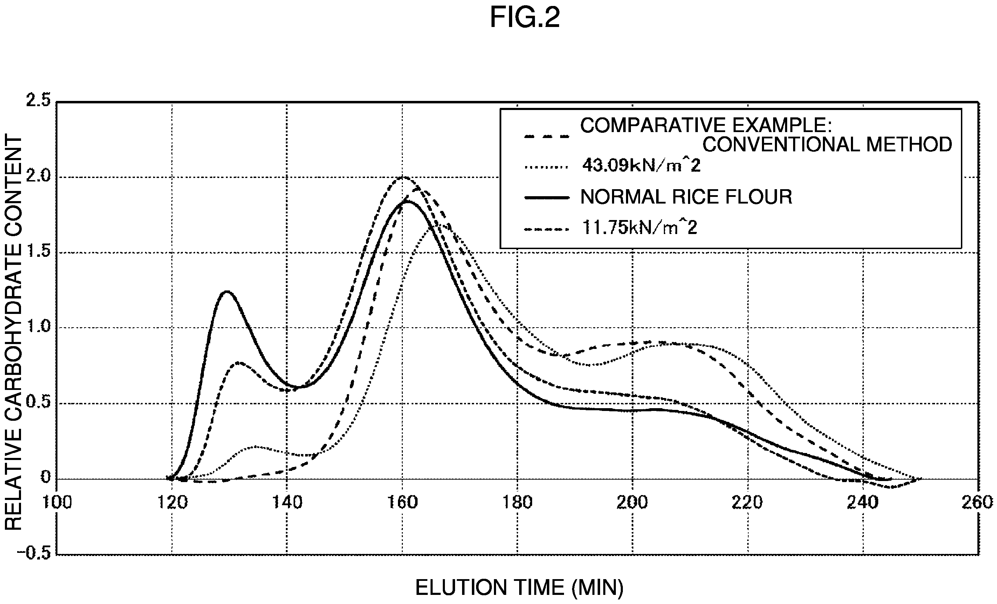

Note that the present inventors found that in the pregelatinized starch dry powder obtained using a production device of JP4767128B, which does not have a pressing member, there are only two peaks indicating starch, and the first peak from the high molecular weight side was lower than the second peak from the high molecular weight side (for example, the first peak was half the second peak or less) (see "Comparative Example: conventional method" in Fig. 2).

In the first pregelatinized starch dry powder, the first peak from the high molecular weight side has a lower intensity, preferably 0.5 times or less, and more preferably 0.4 times or less, than that of the third peak from the high molecular weight side.

(1-3) Requirement 1C

Crystallinity of the first pregelatinized starch dry powder is 22.5% or less. That is, the first pregelatinized starch dry powder has a high proportion of amorphous portions.

An upper limit of the crystallinity of the first pregelatinized starch dry powder is 22.5% or less, preferably 20.0% or less, and more preferably 17.0% or less, or 14.0% or less.

A lower limit of the crystallinity of the first pregelatinized starch dry powder is preferably 1.0% or more, more preferably 2.0% or more, even more preferably 4.0% or more, still more preferably 7.0% or more, and still more preferably 12.0% or more.

In the present invention, the "crystallinity" is specified by the method described in Examples.

(2) Pregelatinized starch dry powder according to second aspect

The pregelatinized starch dry powder according to a second aspect (hereinafter also referred to as a "second pregelatinized starch dry powder") satisfies both of the (requirement 2A) and the (requirement 2B). However, in addition to these requirements, the second pregelatinized starch dry powder may or may not further satisfy the (requirement 1B).

Hereinafter, descriptions of requirements that overlap with those of the first pregelatinized starch dry powder will be omitted as appropriate.

(2-1) Requirement 2A

The second pregelatinized starch dry powder has at least three regions showing starch in the gel filtration chromatography.

Both of the following formulas (1) and (2) are satisfied when, in the three regions, the region from 120 minutes or more to less than 145 minutes is designated as "A", the region from 145 minutes or more to less than 190 minutes is designated as "B", and the region from 190 minutes or more to less than 250 minutes is designated as "C".

$$A/(A + B + C) > 0.05 \qquad \text{formula}(1)$$

$$C/(A + B + C) > \ 0.2 \qquad \text{formula}(2)$$

Each of the regions can correspond to a peak area in the gel filtration chromatography.

For example, the region "A" can correspond to a peak area from 120 minutes or more to less than 145 minutes. The region "B" can correspond to a peak area at the retention time from 145 minutes or more to less than 190 minutes. The region "C" can correspond to a peak area at the retention time from 190 minutes or more to less than 250 minutes.

The pregelatinized starch dry powder that satisfies the above formulas means that a proportion of low-molecular starch is higher than that of high-molecular starch.

According to the production method of the present invention, it is easy to obtain a molecular weight distribution having such a relationship. This is presumed to be the result of the high-molecular starch having changed to the low-molecular form at an appropriate proportion due to the shearing force.

In the formula (1), a lower limit of "A/(A + B + C)" is more than 0.05, preferably 0.08 or more, and more preferably 0.1 or more.

In the formula (1), an upper limit of "A/(A + B + C)" is preferably 0.45 or less, and more preferably 0.40 or less.

In the formula (2), a lower limit of "C/(A + B + C)" is more than 0.2, preferably 0.25 or more, and more preferably 0.30 or more.

In the formula (2), an upper limit of "C/(A + B + C)" is preferably 0.90 or less, and more preferably 0.80 or less.

In the requirement 2A, "B/(A + B + C)" is not particularly limited, but may satisfy the following requirements.

A lower limit of "B/(A + B + C)" is preferably 0.15 or more, and more preferably 0.20 or more.

An upper limit of "B/(A + B + C)" is preferably 0.70 or less, and more preferably 0.60 or less.

(2-2) Requirement 2B

Crystallinity of the second pregelatinized starch dry powder is 22.5% or less.
Details of the (requirement 2B) are the same as the (requirement 1C).

(3) Other requirements

Other requirements for the first and second pregelatinized starch dry powders are not particularly limited, but by satisfying any or all of the following requirements, it is easy to obtain a pregelatinized starch dry powder having better processing properties.

(3-1) Loss elastic modulus

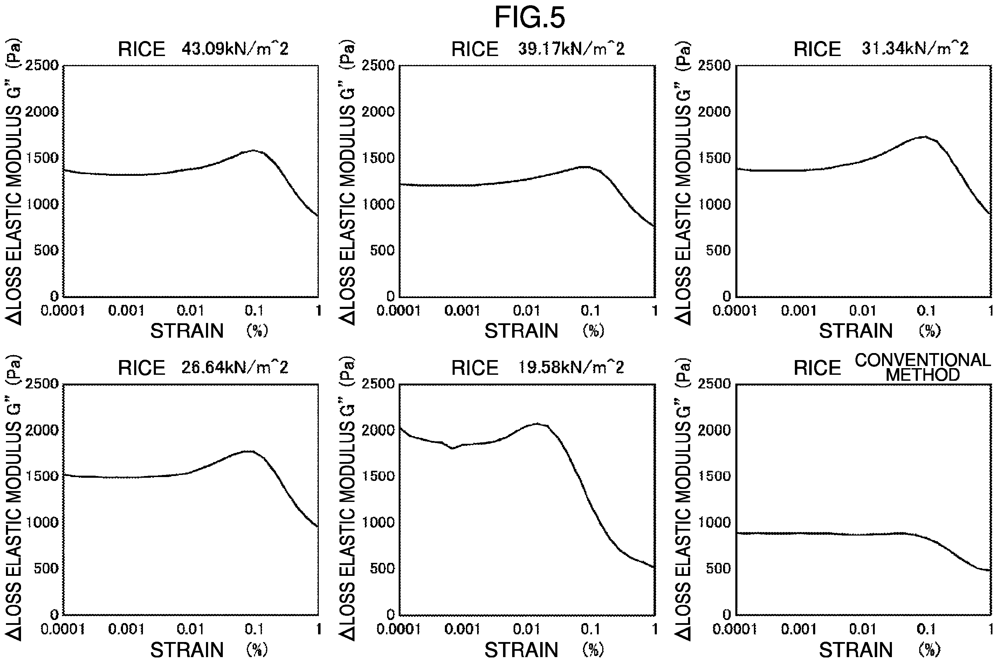

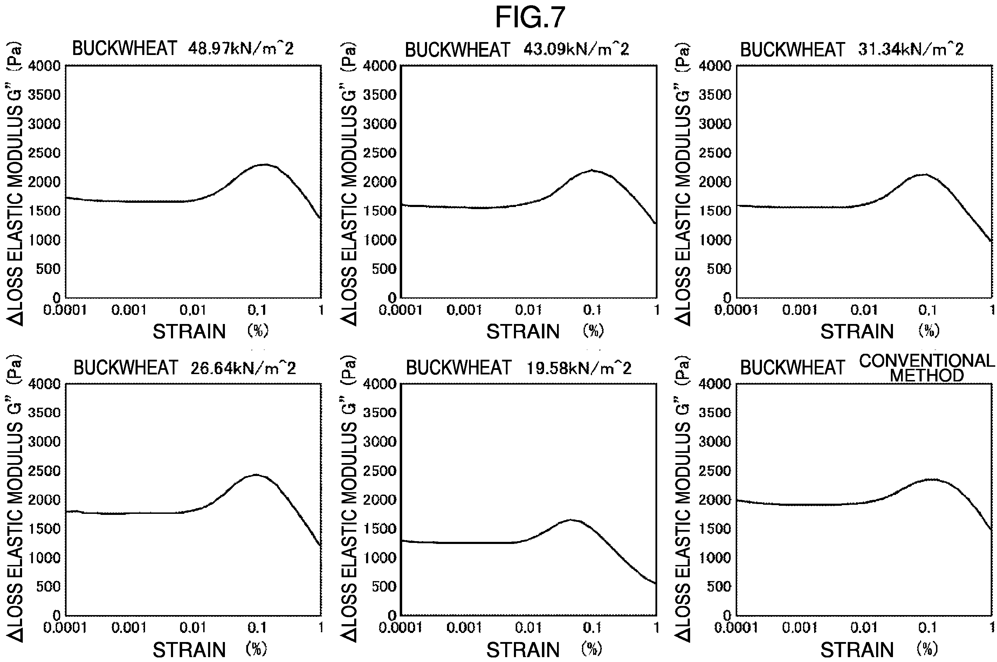

For a loss elastic modulus in a gelation test of the pregelatinized starch dry powder, a maximum value at a peak that appears between shear strains of 0.03 and 0.25 is preferably larger than a value at shear strain of 0.001.
It is common knowledge that the loss elastic modulus in the gelation test of the pregelatinized starch dry powder decreases over time. However, the pregelatinized starch dry powder of the present invention tends to temporarily increase in loss elastic modulus contrary to such common knowledge (see Figs. 5 and 7).
Further, the pregelatinized starch dry powder obtained using the production device of JP4767128B, which does not have the pressing member, shows a constant loss elastic modulus at a small strain immediately after production, but when the strain increase (for example, strain around 0.1), the loss elastic modulus no longer increases. Such dynamics result in a reduction in so-called "koshi". Furthermore, after storage (aging), the loss elastic modulus increases rapidly and becomes hard.
On the other hand, according to the pregelatinized starch dry powder of the present invention that satisfies the above requirements, the loss elastic modulus surprisingly tends to increase even when the strain is large (see Figs. 5 and 7). Therefore, according to the pregelatinized starch dry powder of the present invention, the gel having koshi can be easily produced.
It has also been found that the pregelatinized starch dry powder of the present invention suppresses rapid changes in loss elastic modulus even after storage.
In the present invention, the "gelation test" is performed by the method described in Examples.

(3-2) Viscosity

The pregelatinized starch dry powder may satisfy either or both of the following requirements.

(Viscosity requirement 1) 14 mass% aqueous solution of the pregelatinized starch dry powder has a viscosity of 30 Pa·s or more and 500 Pa·s or less at 35°C, and a viscosity immediately after heating the aqueous solution at 95°C for 5 minutes is 300 Pa s or more.
(Viscosity requirement 2) A viscosity of 14 mass% aqueous solution of the pregelatinized starch dry powder immediately after heating at 95°C for 5 minutes is 1000 Pa s or more.

Ordinary starch dry powder does not absorb water and does not become viscous even when water is added, but the pregelatinized starch dry powder absorbs water and becomes viscous. However, the viscosity of the pregelatinized starch dry powder has conventionally been difficult to be adjusted, and the pregelatinized starch dry powder has poor handling properties. Therefore, crystalline starch was conventionally blended together with the pregelatinized starch dry powder to adjust the viscosity.
In contrast, since the pregelatinized starch dry powder of the present invention can satisfy the above viscosity properties, it is particularly easy to adjust an initial viscosity, and the viscosity after heat processing can also be adjusted.
For example, the pregelatinized starch dry powder of the present invention that satisfies the above viscosity properties is suitable for the following uses.

- Breadmaking or the like, which requires proper viscosity maintenance and processability from shaping to baking.
- Noodle making or the like, which can be processed without using a binder and can obtain various textures (koshi, crispness, and the like).

The viscosity of the pregelatinized starch dry powder can be determined by viscosity profile over time.

In the present invention, the "viscosity profile over time" means data showing changes in viscosity due to temperature changes over time. More specifically, the viscosity profile over time is determined by the method described in Examples.

For the (viscosity requirement 1), the viscosity at 35°C is 30 Pa s or more and 500 Pa·s or less, and preferably 70 Pa s or more and 400 Pa s or less.

For the (viscosity requirement 1), the viscosity immediately after heating at 95°C for 5 minutes is 300 Pa·s or more, and preferably 350 Pa·s or more. Although the upper limit is not particularly limited, it is usually 1300 Pa s or less.

For the (viscosity requirement 2), the viscosity immediately after heating at 95°C for 5 minutes is 1000 Pa s or more, and preferably 1250 Pa s or more. Although the upper limit is not particularly limited, it is usually 2000 Pa s or less.

(3-3) Moisture content

A moisture content of the pregelatinized starch dry powder is preferably 12.5 mass% or less, more preferably 10.0 mass% or less, and still more preferably 8.0 mass% or less.

In the present invention, the "moisture content" is a total amount of water contained in the pregelatinized starch dry powder.

The moisture content can be determined using a moisture meter (an infrared moisture meter or the like).

(4) Use

The use of the pregelatinized starch dry powder of the present invention is not particularly limited, and the pregelatinized starch dry powder can be used for any purpose such as the same uses (foods, medicines, and the like) as conventionally known pregelatinized starch dry powders.

As described above, since the pregelatinized starch dry powder of the present invention has excellent processing properties, it can be used as a good substitute for a conventionally used pregelatinized starch dry powder.

<Pregelatinized buckwheat dry powder>

The present inventors have found the following novel pregelatinized buckwheat dry powder. The pregelatinized buckwheat dry powder can be obtained, for example, by applying the production method of the present invention to buckwheat seeds.

(Pregelatinized buckwheat dry powder according to first aspect)

A pregelatinized buckwheat dry powder having a crystallinity of 18.0% or less.

An upper limit of the crystallinity of the pregelatinized buckwheat dry powder is 18.0% or less, and preferably 15.0% or less.

A lower limit of the crystallinity of the pregelatinized buckwheat dry powder is preferably 1.0% or more, more preferably 2.0% or more, even more preferably 4.0% or more, still more preferably 7.0% or more, and still more preferably is 12.0% or more.

(Pregelatinized buckwheat dry powder according to second aspect)

A pregelatinized buckwheat dry powder having a moisture content of 12.5 mass% or less.

An upper limit of the moisture content of the pregelatinized buckwheat dry powder is 12.5 mass% or less, and preferably 10.0 mass% or less.

A lower limit of the moisture content of the pregelatinized buckwheat dry powder is preferably 3.0 mass% or more, and more preferably 5.0 mass% or more.

In either aspect, in the pregelatinized buckwheat dry powder, the maximum value at the peak that appears between shear strains of 0.03 and 0.25 is preferably 1.30 times or more larger than the value at shear strain of 0.001, and more preferably 1.31 times or more larger than the value at shear strain of 0.001.

Note that the upper limit above is not particularly limited, but is usually 1.50 times or less.

<Production device for pregelatinized starch dry powder>

The present invention also includes a device for producing pregelatinized starch, the device including the following grinding mechanism and temperature adjusting means.

In the production device, the grinding mechanism includes at least two rigid members arranged opposite to each other, and a pressing member that presses at least one of the rigid members so that a gap distance between the rigid members is variable by the force from the opposing surface side of the rigid member.

The temperature adjusting means adjusts the temperature of the cereal grain during the process of being sheared by the grinding mechanism.

The rigid members are arranged to be able to shear and grind the cereal grain supplied to the gap formed by the opposing surfaces of the rigid member.

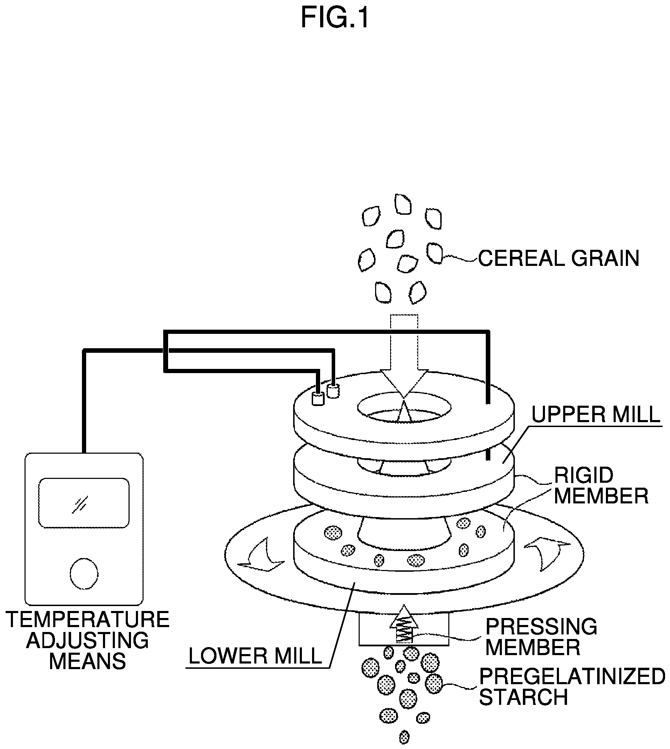

A form of the device for producing the pregelatinized starch of the present invention can be a mill-type grinding machine (for example, a device having a configuration shown in Fig. 1).

In a preferred aspect of the present invention, the pregelatinized starch dry powder of the present invention is obtained by supplying the cereal grain to the production device and grinding them under shear conditions.

Examples

The present invention will be described in more detail with reference to Examples below, but the present invention is not limited to these Examples.

<Preparation of pregelatinized starch dry powder (pregelatinized rice dry powder)>

According to the following method, the cereal grain was ground using the mill-type grinding machine to prepare the pregelatinized starch dry powder.

(1) Preparation of mill-type grinding machine

A small temperature-controlled mill-type grinding machine was prepared.

The grinding machine has a structure similar to a device shown in Fig. 1 of JP4767128B. Specifically, the grinding machine includes a grinding mechanism including an upper mill and a lower mill (corresponding to the rigid members) arranged opposite to each other, a temperature adjusting means that can adjust a temperature of the upper mill, the cereal grain supply port, the cereal grain extraction port, and the like.

In the grinding machine, the cereal grain supplied to the cereal grain supply port is supplied to a gap space between the upper mill and the lower mill, and is ground by an action of the upper mill and the lower mill. The ground product (pregelatinized starch dry powder) can be collected from the cereal grain extraction port.

The upper mill and the lower mill of the grinding machine are fixed in position, and the lower mill rotates horizontally with respect to a surface facing the upper mill to apply the shearing force to the cereal grain.

In this example, the spring (corresponding to the pressing member) is provided under the lower mill and modified to be movable also in a direction perpendicular to the surface facing the upper mill.

The spring having a load surface pressure (a load per unit area) in a range of 9.70 $kN/m^2$ to 56.80 $kN/m^2$ was used. A gap distance between the upper mill and the lower mill is more difficult to be variable as a load value is higher.

Fig. 1 shows a schematic diagram of the mill-type grinding machine used in this example.

(2) Cereal grain shearing

As the cereal grain, "Haenuki" rice grown in Yamagata Prefecture in 2020 was prepared.

The cereal grain was supplied to the mill-type grinding machine, and was sheared through the gap (approximately 0 mm) between the upper mill and the lower mill to be ground. Note that in this example, water was not added to the cereal grain.

The resulting ground product corresponds to the pregelatinized starch dry powder (pregelatinized rice dry powder).

Note that a shearing temperature was set at 120°C. The shear rate was set at 500 $sec^{-1}$.

(3) Analysis of pregelatinized starch dry powder

The resulting pregelatinized starch dry powder (pregelatinized rice dry powder) was subjected to gel filtration chromatography analysis, crystallinity measurement, moisture content measurement, and gelation test.

(3-1) Gel filtration chromatography analysis

1.6 mL of distilled water was added to the pregelatinized starch dry powder (20 mg), suspended using a homogenizer, and added with 0.4 mL of 5M NaOH and stirred, and then gelatinized at 37°C for 30 minutes.

Subsequently, 2 mL each of distilled water and eluent (0.05 M NaOH/0.2% NaCl) were added, mixed, and filtered through a 5 μm filter to prepare a sample solution.

5 mL of the sample solution was applied to a gel filtration column (Toyopearl HW75S×2-65S-55S, Φ2 cm×30 cm×4 columns) and subjected to gel filtration under conditions of eluent 0.05 M NaOH/0.2% NaCl and flow rate 1 mL/min.

Detection was performed using an IR detector, and detected values from 100 minutes to 260 minutes were used.

Fig. 2 shows results of gel filtration chromatography analysis of the pregelatinized rice dry powder (pregelatinized rice dry powder).

In Fig. 2, "Comparative Example: conventional method" means the pregelatinized rice dry powder obtained in the same manner as in an example of JP4767128B.

In Fig. 2, numerical values expressed in a unit "kN/m^2" means a load per area (m$^2$) applied between the upper mill and lower mill. The same applies to the unit "kN/m^2" below.

In Fig. 2, "normal rice flour" means rice dry powder obtained without shearing the cereal grain.

As shown in Fig. 2, when a load of "43.09 kN/m^2" was used, at least three peaks indicating starch were observed (elution time: from 120 minutes or more to less than 145 minutes, from 145 minutes or more to less than 190 minutes, and from 190 minutes or more to less than 250 minutes).

In addition, the first peak (elution time: from 120 minutes or more to less than 145 minutes) from the high molecular weight side had a higher intensity than the third peak (elution time: from 190 minutes or more to less than 250 minutes) from the high molecular weight side.

Therefore, when the load of "43.09 kN/m^2" was used, a pregelatinized starch dry powder that satisfied the (requirement 1A) and the (requirement 1B) was obtained.

Furthermore, it was found that both of the following formulas (1) and (2) were satisfied when, in the three regions, the region from 120 minutes or more to less than 145 minutes was designated as "A", the region from 145 minutes or more to less than 190 minutes was designated as "B", and the region from 190 minutes or more to less than 250 minutes was designated as "C", and thus when a spring having a load of "43.09 kN/m^2" is used, the (requirement 2A) was also satisfied.

$$A/(A + B + C) > 0.05 \qquad \text{formula}(1)$$

$$C/(A + B + C) > 0.2 \qquad \text{formula}(2)$$

In contrast, as shown in Fig. 2, when a load of "11.75 kN/m^2" was used, only a peak from 145 minutes or more to less than 190 minutes was observed.

Therefore, when the load of "11.75 kN/m^2" was used, a pregelatinized starch dry powder that did not satisfy the (requirement 1A), the (requirement 1B), and the (requirement 2A) was obtained.

Furthermore, Fig. 3 shows results of the ratio of each peak area to the total area of the three peaks in gel filtration chromatography of the pregelatinized rice dry powder (pregelatinized rice dry powder) obtained by varying a load of the spring.

In Fig. 3, "crystalline rice flour" means rice dry powder obtained without shearing the cereal grain.

In Fig. 3, numerical values expressed in the unit "kN/m^2" mean the load of the spring used.

In Fig. 3, the "conventional method" means the pregelatinized rice dry powder obtained in the same manner as in the example of JP4767128B.

In Fig. 3, "PTL 2: Example 1" means a pregelatinized rice pureed material obtained in the same manner as Example 1 of JP2017-163849A.

In Fig. 3, "PTL 2: Example 2" means a pregelatinized rice pureed material obtained in the same manner as Example 2 of JP2017-163849A.

In Fig. 3, "1st", "2nd", and "3rd" respectively mean the region from 120 minutes or more to less than 145 minutes, the region from 145 minutes or more to less than 190 minutes, and the region from 190 minutes or more to less than 250 minutes.

As shown in Fig. 3, the molecular weight distribution changed as the load increased, and when a spring of "26.64 kN/m^2" or higher was used, the first peak (elution time: from 120 minutes or more to less than 145 minutes) from the high molecular weight side had a higher intensity than the third peak (elution time: from 190 minutes or more to less than 250 minutes) from the high molecular weight side.

In this way, it is a surprising finding that the gel filtration chromatography of the resulting pregelatinized starch dry powder is completely different depending on whether the gap distance between the rigid members is varied by the force from the opposing surface side of the rigid member during shearing.

(3-2) Measurement of crystallinity

Based on measurement results of wide-angle X-ray diffraction, the peaks were separated into amorphous scattering and crystalline reflection.

An obtained integral value of a peak due to amorphous scattering was designated as "$S_a$", an obtained integral value of a peak due to crystal reflection was designated as "$S_c$", and the crystallinity of the pregelatinized starch dry powder was calculated based on the following formula.

$$\text{Crystallinity } (\%) = (Sc/(Sc + Sa)) \times 100$$

(Measurement conditions for wide-angle X-ray diffraction)

Measuring equipment: "RINT-RAPID" manufactured by Rigaku
Scan speed: 4°/min
Measurement angle: 5° to 35°
Tube voltage: 40 kV
Tube current: 30 mA

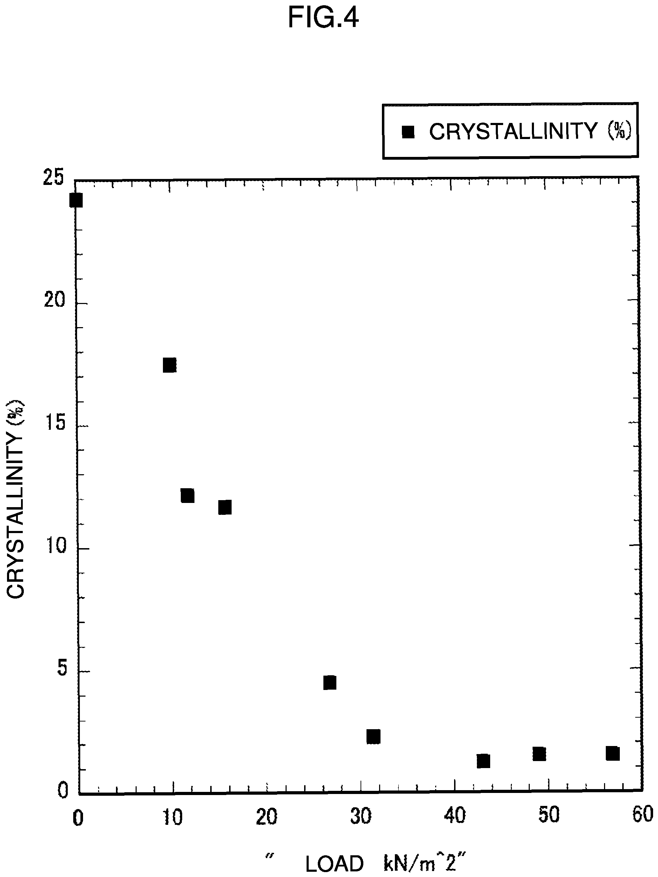

Fig. 4 is a plot of a relationship between the load of the spring used for shearing and the crystallinity of the resulting pregelatinized starch dry powder (pregelatinized rice dry powder). Note that in Fig. 4, a result where the load is "0" is a result of shearing without using the spring.

As shown in a result of using the load of "43.09 kN/m^2" in Fig. 4, the crystallinity was about 1.29%.

Therefore, when the load of "43.09 kN/m^2" was used, as described above, a pregelatinized starch dry powder that satisfies not only the (requirement 1A), the (requirement 1B), and the (requirement 2A), but also the (requirement 1C) and the (requirement 2B) was obtained.

Furthermore, when a load of "11.75 kN/m^2" or more was used, it was easy to obtain a pregelatinized starch dry powder that satisfied the (requirement 1C) and the (requirement 2B).

Further, as shown in Fig. 4, at loads of "43.09 kN/m^2", "48.97 kN/m^2", and "56.81 kN/m^2", crystallinities were respectively about 1.2%, about 1.5%, and about 1.5%, and any of them satisfied the (requirement 1C) and the (requirement 2B).

On the other hand, when a load of "9.79 kN/m^2" or less was used, not only the (requirement 1C) and the (requirement 2B) were not satisfied, but also amorphization is not sufficient, and thus a pregelatinized starch dry powder with various poor performance was obtained.

Note that although not shown, these pregelatinized starch dry powders were pregelatinized starch dry powders having a crystallinity of more than 12% (pregelatinized starch dry powders with low amorphousness), or pregelatinized starch dry powders having a crystallinity of less than 1% (pregelatinized starch dry powders with excessive amorphousness). In addition, when the pregelatinized starch dry powder having a crystallinity of less than 1% was obtained, it required a very strong shearing load and energy, but was almost the same in texture and the like with a pregelatinized starch dry powder having a crystallinity of 1% or more.

In this way, it is a surprising finding that the crystallinity of the resulting pregelatinized starch dry powder is completely different depending on whether the gap distance between the rigid members is varied by the force from the opposing surface side of the rigid member during shearing, and the extent of the variation.

(3-3) Measurement of moisture content

The moisture content of the pregelatinized starch dry powder (pregelatinized rice dry powder) was measured under the following conditions.

For the measurement, an infrared moisture meter "FD-720" (manufactured by Kett Electric Laboratory Co. Ltd.) was used.

A measurement sample was set at 3 g, and a drying temperature was set at 105°C.

An amount of moisture change was measured for 30 seconds, and the measurement was terminated when it was 0.01 w/w% or less from start of the measurement. The moisture content was calculated from the amount of moisture change.

Table 1 is a table showing the moisture content of each pregelatinized starch dry powder.

In Table 1, "load" means the load of the spring used.

In Table 1, "conventional method" means results using the pregelatinized rice dry powder obtained in the same manner as in the example of JP4767128B.

[Table 1]

| Load (kN/m^2) | 0 | 43.09 | 31.34 | 26.64 | 19.59 | 15.67 | 11.75 | 9.79 | Conventional method |
|---|---|---|---|---|---|---|---|---|---|
| Moisture content (mass%) | 13.02 | 5.28 | 6.89 | 7.26 | 6.17 | 8.2 | 11.25 | 9.54 | 7.2 |

(3-4) Measurement of loss elastic modulus

The pregelatinized starch dry powder (pregelatinized rice dry powder) was gelled under the following conditions, and the loss elastic modulus was measured.

(3-4-1) Preparation of rice gel

Water in an amount three times a weight of dry base was added to each pregelatinized starch dry powder, and gelation was performed by high-speed shear stirring under the following conditions.

[Conditions for high-speed shear stirring]

    Apparatus: "Robotcoupe R-5plus" (FMI Corporation)
    Stirring conditions: rotation speed 1500 rpm, stirring time 3 minutes

(3-4-2) Measurement of dynamic viscoelasticity

A loss elastic modulus "G''" from 0.01% to 100% was measured under the following conditions.
Note that in order to prevent the rice gel from drying out during the measurement, silicone oil was applied to a side of the sample before each measurement. In addition, before measurement, a measurement temperature (a measurement start temperature) was maintained for 5 minutes to equilibrate the temperature.

[Measurement conditions]

    Apparatus: "MCR301" (Anton Paar GmbH)
    Jig: 25mm parallel plate
    Conditions: Strain 0.01% to 100%, frequency 1 Hz, temperature 25°C

Fig. 5 is a diagram showing a relationship between the loss elastic modulus and the shear strain for each of the resulting pregelatinized starch dry powders.
In Fig. 5, the "conventional method" means the results using the pregelatinized rice dry powder obtained in the same manner as in the example of JP4767128B.
In the pregelatinized starch dry powder obtained by shearing using a load of "19.58 kN/m^2" to "43.09 kN/m^2", the maximum value at the peak that appeared between shear strains of 0.03 and 0.25 was larger than the value at shear strain of 0.001.
In this way, it is a surprising finding that the dynamics of the loss elastic modulus of the pregelatinized starch dry powder is completely different depending on whether the gap distance between the rigid members is varied by the force from the opposing surface side of the rigid member during shearing.

(3-5) Analysis of viscosity profile over time

A gelatinization viscosity behavior over time was analyzed under the following conditions to obtain the viscosity profile over time.
43 g of water was added to the pregelatinized starch dry powder (7.0 g) to prepare a sample (14 mass% aqueous solution of the pregelatinized starch dry powder).

Subsequently, using "MCR301" (Anton Paar GmbH), a temperature change was applied to each sample for 1400 seconds.

A temperature program was set as follows. First, after the temperature was equilibrated at 35°C, it was increased by 10°C per minute to 95°C, held for 6 minutes, and finally decreased by 10°C per minute until it reached 35°C. Note that a paddle rotation speed was set to 160 rpm.

Table 2 is a table showing the viscosity of each sample.

In Table 2, "load" means the load of the spring used.

In Table 2, "initial viscosity" means a viscosity of the sample at 35°C.

In Table 2, "viscosity after heating" means a viscosity of the sample immediately after heating at 95°C for 5 minutes.

In Table 2, "conventional method" means the results using the pregelatinized rice dry powder obtained in the same manner as in the example of JP4767128B.

[Table 2]

| Load (kN/m^2) | 43.09 | 39.17 | 31.34 | 26.64 | 19.58 | 15.67 | Conventional method |
|---|---|---|---|---|---|---|---|
| Initial viscosity (Pa·s) | 323.19 | 485.17 | 221.6 | 262.29 | 78.589 | 39.884 | 660.87 |
| Viscosity after heating (Pa·s) | 374.24 | 400.85 | 438.7 | 445.16 | 903.85 | 1301.8 | 124.19 |

As shown in Table 1, when shearing was performed using the spring, the viscosity was within a range of 30 Pa·s to 500 Pa·s at 35°C, and the viscosity immediately after heating at 95°C for 5 minutes was within a range of 300 Pa·s or more.

On the other hand, in the "conventional method", although the viscosity at 35°C was high, the viscosity after heating was low, and the dynamics was completely different from that of the pregelatinized starch dry powder obtained using the spring.

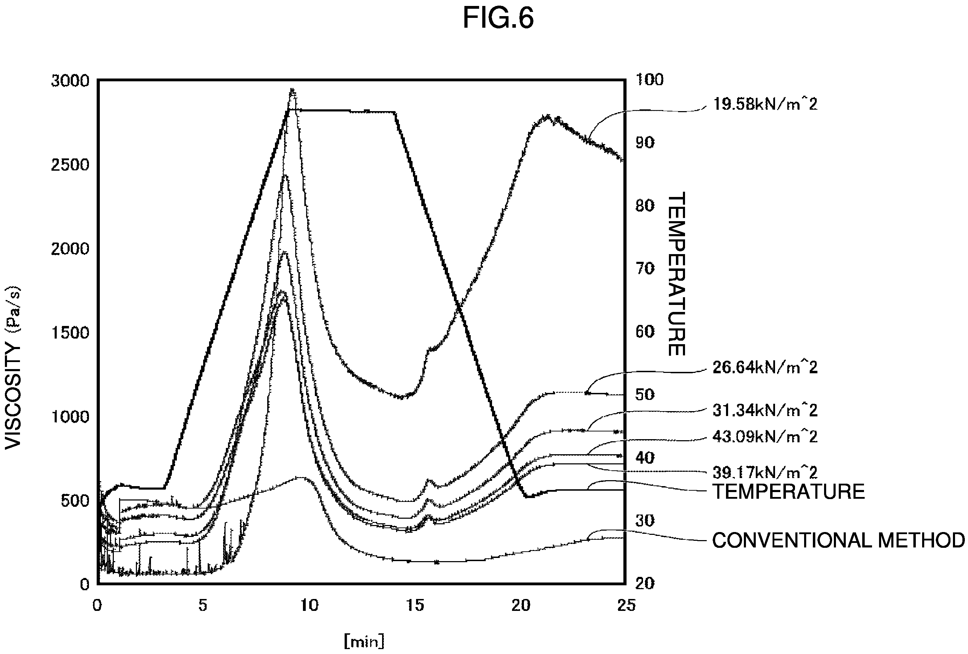

Fig. 6 shows the obtained viscosity profile over time.

In Fig. 6, the "conventional method" means the results using the pregelatinized rice dry powder obtained in the same manner as in the example of JP4767128B.

As shown in Fig. 6, when shearing was performed using the spring, the first peak (approximately 400 sec) of the viscosity profile over time was much larger (twice or more) than an initial value (0 sec). Further, even after the first peak (approximately 400 sec), values were always higher than the initial value.

In contrast, when shearing was performed without using the spring, only a difference of less than twice was observed between the first peak of the viscosity profile over time and the initial value. Furthermore, after the first peak (approximately 400 sec), a value lower than the initial value was observed.

(3-6) Evaluation of pregelatinized starch dry powder (pregelatinized rice dry powder)

The pregelatinized rice dry powder obtained in this example had easy adjustment of viscosity and excellent handling properties.

In addition, the pregelatinized rice dry powder could be processed without using a binder, obtain various textures (koshi, crispness, and the like), and was suitable for bread making or the like.

<Preparation of pregelatinized starch dry powder (pregelatinized buckwheat dry powder)>

The pregelatinized buckwheat dry powder was prepared using buckwheat (buckwheat seeds) instead of rice in the same manner as in the above <preparation of the pregelatinized starch dry powder (pregelatinized rice dry powder)>.

The resulting pregelatinized starch dry powder (pregelatinized buckwheat dry powder) was subjected to gel filtration chromatography analysis, crystallinity measurement, moisture content measurement, and gelation test.

Table 3 is a table showing the relationship between the load of the spring used for shearing and the crystallinity of the resulting pregelatinized starch dry powder (pregelatinized buckwheat dry powder).

In Table 3, "load" means the load of the spring used.

In Table 3, "conventional method" means the results using the pregelatinized rice dry powder obtained in the same manner as in the example of JP4767128B.

[Table 3]

| Load (kN/m^2) | 0 | 15.67 | 19.59 | 26.64 | 31.34 | 39.18 | 43.09 | 48.97 | 56.81 | Conventional method |
|---|---|---|---|---|---|---|---|---|---|---|
| Crystallinity (%) | 20.9 | 10.0 | 9.0 | 5.9 | 5.5 | 3.8 | 3.6 | 3.1 | 3.5 | 0.4 |

Table 4 is a table showing the moisture content of each pregelatinized starch dry powder.

In Table 4, "load" means the load of the spring used.

In Table 4, "conventional method" means the results using the pregelatinized rice dry powder obtained in the same manner as in the example of JP4767128B.

[Table 4]

| Load (kN/m^2) | 0.00 | 15.67 | 19.59 | 26.64 | 31.34 | 39.18 | 43.09 | 48.97 | 56.81 | Conventional method |
|---|---|---|---|---|---|---|---|---|---|---|
| Moisture content (mass%) | 14.85 | 7.5 | 6.99 | 7.09 | 6.2 | 6.26 | 6.29 | 6.5 | 6.6 | 8.5 |

Fig. 7 is a diagram showing the relationship between the loss elastic modulus and the shear strain for the pregelatinized rice dry powder (pregelatinized buckwheat dry powder).

In Fig. 7, the "conventional method" means the results using the pregelatinized rice dry powder obtained in the same manner as in the example of JP4767128B.

In the pregelatinized starch dry powder, the maximum value at the peak that appeared between shear strains of 0.03 and 0.25 was larger than the value at shear strain of 0.001.

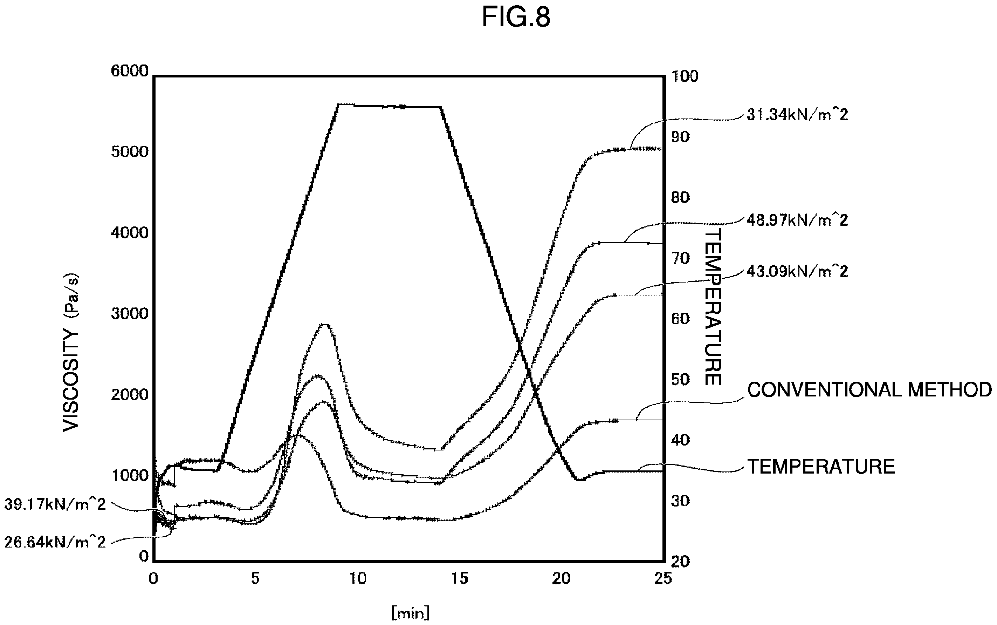

Fig. 8 is the viscosity profile over time of the pregelatinized rice dry powder (pregelatinized buckwheat dry powder).

In Fig. 8, the "conventional method" means the results using the pregelatinized rice dry powder obtained in the same manner as in the example of JP4767128B.

The pregelatinized buckwheat dry powder obtained in this example had easy adjustment of viscosity and excellent handling properties.

In addition, the pregelatinized buckwheat dry powder could be processed without using a binder, obtain various textures (koshi, crispness, and the like), and was suitable for noodle making or the like.

**Claims**

1. A method for producing a pregelatinized starch dry powder, the method comprising a step of supplying cereal grain to a production device including a grinding mechanism and a temperature adjusting means, and grinding the cereal grain under shear conditions, wherein
   the grinding mechanism includes:

   at least two rigid members arranged opposite to each other; and
   a pressing member that presses at least one of the rigid members so that a gap distance between the rigid members is variable by a force from an opposing surface side of the rigid member,
   the temperature adjusting means adjusts a temperature of the cereal grain in a process of being sheared by the grinding mechanism, and
   the rigid members are arranged to be able to shear and grind the cereal grain supplied to a gap formed by opposing surfaces of the rigid members.

2. A pregelatinized starch dry powder that satisfies all of the following requirements:

   (requirement 1A) having at least three peaks indicating starch in gel filtration chromatography;
   (requirement 1B) a first peak from a high molecular weight side having a lower intensity than that of a third peak from the high molecular weight side among the at least three peaks; and
   (requirement 1C) crystallinity being 22.5% or less.

3. A pregelatinized starch dry powder that satisfies all of the following requirements:

   (requirement 2A) having at least three regions showing starch in gel filtration chromatography, and satisfying both of the following formulas (1) and (2) when, in the three regions, a region from 120 minutes or more to less than 145 minutes is designated as "A", a region from 145 minutes or more to less than 190 minutes is designated as "B", and a region from 190 minutes or more to less than 250 minutes is designated as "C"; and

$$A/(A + B + C) > 0.05 \qquad \text{formula(1)}$$

$$C/(A + B + C) > \quad 0.2 \qquad \text{formula(2)}$$

(requirement 2B) crystallinity being 22.5% or less.

4. The pregelatinized starch dry powder according to claim 2 or 3, wherein in a loss elastic modulus in a gelation test, a maximum value at a peak that appears between shear strains of 0.03 and 0.25 is larger than a value at shear strain of 0.001.

5. The pregelatinized starch dry powder according to claim 2 or 3, wherein

14 mass% aqueous solution of the pregelatinized starch dry powder has a viscosity of 30 Pa s or more and 500 Pa·s or less at 35°C, and
a viscosity immediately after heating the aqueous solution at 95°C for 5 minutes is 300 Pa·s or more.

6. The pregelatinized starch dry powder according to claim 2 or 3, wherein a viscosity of 14 mass% aqueous solution of the pregelatinized starch dry powder immediately after heating at 95°C for 5 minutes is 1000 Pa·s or more.

7. The pregelatinized starch dry powder according to claim 2 or 3, having a moisture content of 12.5 mass% or less.

8. A pregelatinized buckwheat dry powder having a crystallinity of 18.0% or less.

9. A pregelatinized buckwheat dry powder having a moisture content of 12.5 mass% or less.

10. The pregelatinized buckwheat dry powder according to claim 8 or 9, wherein in a loss elastic modulus in a gelation test, a maximum value at a peak that appears between shear strains of 0.03 and 0.25 is 1.30 times or more larger than a value at shear strain of 0.001.

11.

A device for producing a pregelatinized starch dry powder, the device comprising a grinding mechanism and a temperature adjusting means, wherein
the grinding mechanism includes:

at least two rigid members arranged opposite to each other; and
a pressing member that presses at least one of the rigid members so that a gap distance between the rigid members is variable by a force from an opposing surface side of the rigid member,
the temperature adjusting means adjusts a temperature of the cereal grain in a process of being sheared by the grinding mechanism, and
the rigid members are arranged to be able to shear and grind the cereal grain supplied to a gap formed by opposing surfaces of the rigid members.

# FIG.1

CEREAL GRAIN

UPPER MILL

RIGID MEMBER

TEMPERATURE ADJUSTING MEANS

LOWER MILL

PRESSING MEMBER

PREGELATINIZED STARCH

# FIG.2

EP 4 484 472 A1

# FIG.3

CHANGE OF MOLECULAR WEIGHT DISTRIBUTION DUE TO LOAD GRINDING IN RICE FLOUR

# FIG.4

# FIG.5

EP 4 484 472 A1

# FIG.6

# FIG.7

BUCKWHEAT 48.97kN/m^2

BUCKWHEAT 43.09kN/m^2

BUCKWHEAT 31.34kN/m^2

BUCKWHEAT 26.64kN/m^2

BUCKWHEAT 19.58kN/m^2

BUCKWHEAT CONVENTIONAL METHOD

# FIG.8

EP 4 484 472 A1

## INTERNATIONAL SEARCH REPORT

| International application No. |
| --- |
| **PCT/JP2023/006269** |

**A.    CLASSIFICATION OF SUBJECT MATTER**

*C08J 3/12*(2006.01)i; *A23L 7/10*(2016.01)i; *A23L 29/212*(2016.01)i; *A47J 43/04*(2006.01)i; *C08B 30/14*(2006.01)i; *C08B 30/16*(2006.01)i

FI:    C08J3/12 A CEP; C08B30/16; A23L7/10; A23L7/10 A; A23L7/10 H; A47J43/04; A23L7/10 Z; C08B30/14; A23L29/212

According to International Patent Classification (IPC) or to both national classification and IPC

**B.    FIELDS SEARCHED**

Minimum documentation searched (classification system followed by classification symbols)

C08J3/12; A23L7/10; A23L29/212; A47J43/04; C08B30/14; C08B30/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2018-38368 A (UNIV YAMAGATA) 15 March 2018 (2018-03-15)<br>claims, examples 1-10, paragraphs [0030]-[0036], fig. 1-5 | 1-11 |
| A | JP 2021-29201 A (UNIV YAMAGATA) 01 March 2021 (2021-03-01)<br>claims, examples | 1-11 |
| A | JP 2018-198570 A (UNIV TOKYO) 20 December 2018 (2018-12-20)<br>claims, examples | 1-11 |
| A | JP 2021-113312 A (SANEI GEN FFI INC) 05 August 2021 (2021-08-05)<br>claims, examples | 1-11 |
| A | WO 2019/235142 A1 (SHOWA SANGYO CO., LTD.) 12 December 2019 (2019-12-12)<br>claims, examples | 1-11 |
| A | US 2018/0305257 A1 (UNITED STATES GYPSUM COMPANY) 25 October 2018 (2018-10-25)<br>claims, examples | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 April 2023** | **09 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/006269**

| Patent document cited in search report | | | Publication date (day/month/year) | Patent family member(s) | | | Publication date (day/month/year) |
|---|---|---|---|---|---|---|---|
| JP | 2018-38368 | A | 15 March 2018 | (Family: none) | | | |
| JP | 2021-29201 | A | 01 March 2021 | (Family: none) | | | |
| JP | 2018-198570 | A | 20 December 2018 | (Family: none) | | | |
| JP | 2021-113312 | A | 05 August 2021 | (Family: none) | | | |
| WO | 2019/235142 | A1 | 12 December 2019 | CN | 112292042 | A | |
| | | | | TW | 202011825 | A | |
| US | 2018/0305257 | A1 | 25 October 2018 | WO | 2018/195369 | A1 | |

Form PCT/ISA/210 (patent family annex) (January 2015)

**REFERENCES CITED IN THE DESCRIPTION**

**Patent documents cited in the description**

- JP H0367555 A
- JP 2017163849 A

- JP 4767128 B